# EUROPÄISCHE PATENTANMELDUNG

(11) **EP 4 349 543 A1**
(43) Veröffentlichungstag der Anmeldung: **10.04.2024**
(21) Anmeldenummer: 23199212.4
(22) Anmeldetag: 22.09.2023
(51) Int. Cl.: B25J 9/16

(54) **VERFAHREN ZUM HANDHABEN VON GEGENSTÄNDEN UND HANDHABUNGSANLAGE**

(30) Priorität: 04.10.2022 DE 102022125564
(71) Anmelder: J. Schmalz GmbH, 72293 Glatten (DE)
(72) Erfinder: Frey, Matthias, 72172 Sulz-Dürrenmettstetten (DE); Sipple, Jeremia, 72293 Glatten (DE)
(74) Vertreter: DREISS Patentanwälte PartG mbB

(57) **Zusammenfassung**

Die Erfindung betrifft ein Verfahren zum Handhaben von Gegenständen (54) mittels einer Handhabungsanlage (10), umfassend einen Roboter (12) mit einem ersten Roboterarm (20-1) und einem zweiten Roboterarm (20-2), einen Quellbehälter (52), einen Zielbehälter (56), und eine Erkennungseinrichtung (58) zur Charakterisierung des Quellbehälters und des Zielbehälters, wobei die Roboterarme derart um die Hauptachse verschwenkt werden, dass jeder Roboterarm abwechselnd den Quellbehälter und den Zielbehälter anfährt, wobei die Roboterarme bei ihrer Bewegung zwischen Quellbehälter und Zielbehälter eine Nullstellung durchlaufen, in welcher sich die Roboterarme weder über dem Quellbehälter noch über dem Zielbehälter befinden, wobei dann, wenn die Roboterarme in der Nullstellung sind, der Quellbehälter und/oder der Zielbehälter mittels der Erkennungseinrichtung charakterisiert wird, insbesondere bildlich erfasst wird. Die Erfindung betrifft auch eine dafür ausgebildete Handhabungsanlage.

## Beschreibung

Die Erfindung betrifft ein Verfahren zum Handhaben von Gegenständen sowie eine dafür ausgebildete Handhabungsanlage.

Handhabungsanlagen finden beispielsweise beim Kommissionieren von Waren in Warenlagern Verwendung und dienen dort insbesondere dazu, Warengegenstände aus einem Lagerbehälter mit einer Mehrzahl von Warengegenständen zu greifen (sog. "bin-picking" oder "Griff in die Kiste") und an einen anderen Ort, bspw. in einen Transportbehälter, zu verbringen. Solche Handhabungsanlagen umfassen üblicherweise einen Roboter mit einem Roboterarm, an welchem ein Endeffektor zum Greifen eines Gegenstands angeordnet ist.

Für einen effizienten Einsatz ist es in diesem Zusammenhang von entscheidender Bedeutung, wie viele Gegenstände pro Zeitintervall mit der Handhabungsanlage gegriffen und an einen anderen Ort verbracht werden können, was üblicherweise als "Pickleistung" bzw. "Greifleistung" der Handhabungsanlage charakterisiert wird.

Die Erfindung beschäftigt sich mit der Aufgabe, Gegenstände mit hoher Greifleistung handhaben zu können, insbesondere zwischen zwei Orten verbringen zu können.

Diese Aufgabe wird durch ein Verfahren mit den Merkmalen des Anspruchs 1 gelöst. Bei dem Verfahren handelt es sich um ein Verfahren zum Handhaben von Gegenständen, beispielsweise zum Kommissionieren von Gegenständen.

Das Verfahren wird mittels einer Handhabungsanlage durchgeführt. Insofern handelt es sich bei dem Verfahren insbesondere auch um ein Verfahren zum Betreiben einer Handhabungsanlage.

Die Handhabungsanlage umfasst einen Roboter mit einem ersten Roboterarm und einem zweiten Roboterarm. Es ist auch denkbar, dass der Roboter mehr als zwei Roboterarme aufweist. An den Roboterarmen ist jeweils ein Endeffektor zum Greifen jeweils eines Gegenstands angeordnet. Der Roboter ist insofern insbesondere dazu ausgebildet, mehrere Gegenstände, insbesondere gleichzeitig, zu greifen. Insbesondere ist der Roboter dazu ausgebildet, die Endeffektoren und optional damit gegriffene Gegenstände zu verlagern, insbesondere entlang voneinander unabhängiger Bewegungsbahnen. Bei dem Endeffektor kann es sich beispielsweise um einen pneumatisch betätigbaren Greifer, insbesondere Sauggreifer, handeln.

Die Roboterarme sind um eine gemeinsame, insbesondere vertikale, Hauptachse schwenkbar. Beispielsweise ist es denkbar, dass die Roboterarme an einer gemeinsamen Roboterbasis um die Hauptachse schwenkbar gelagert sind. Es ist auch denkbar, dass jeder Roboterarm Teil einer eigenen Robotereinheit ist. Dann sind die Robotereinheiten insbesondere derart angeordnet, dass die Roboterarme um eine gemeinsame Achse (Hauptachse) schwenkbar sind.

Die Roboterarme weisen jeweils eine Scara-Kinematik, insbesondere 4-Achs-Scara-Kinematik, auf. Insbesondere weisen die Roboterarme jeweils eine Spindel auf. Insbesondere ist der jeweilige Endeffektor an der Spindel, vorzugsweise an einem Ende der Spindel, angeordnet. Die Spindel ist vorzugsweise Teil eines Spindelantriebs. Die Spindel ist vorzugsweise zum Antreiben einer translatorischen und/oder rotatorischen Stellbewegung des Endeffektors ausgebildet, insbesondere bezüglich einer, vorzugsweise zu der Hauptachse parallelen, insbesondere vertikalen, Spindelachse.

Die Handhabungsanlage umfasst außerdem wenigstens einen Quellbehälter zur Aufnahme von Gegenständen. Insbesondere können in dem Quellbehälter mehrere Gegenstände vorgesehen sein, insbesondere darin aufgenommen sein. Insofern kann die Handhabungsanlage einen Quellbehälter mit einer Mehrzahl von darin angeordneten Gegenständen umfassen.

Die Handhabungsanlage umfasst außerdem wenigstens einen Zielbehälter zur Aufnahme von Gegenständen. Es ist denkbar, dass der Zielbehälter zu Beginn eines Handhabungsvorgangs leer ist. Es ist auch denkbar, dass der Zielbehälter zu Beginn eines Handhabungsvorgangs bereits teilweise gefüllt ist, bspw. mit Gegenständen. Insbesondere kann es sich bei dem Quellbehälter um einen Lagerbehälter handeln und bei dem Zielbehälter kann es sich um einen Transportbehälter, bspw. ein Paketkarton, handeln.

Der wenigstens eine Quellbehälter und der wenigstens eine Zielbehälter sind derart, insbesondere entlang eines Umfangs, um die Hauptachse verteilt angeordnet, dass die Roboterarme, insbesondere voneinander unabhängig, Gegenstände aus dem Quellbehälter greifen können und in den Zielbehälter überführen und dort ablegen können. Der wenigstens eine Quellbehälter und der wenigstens eine Zielbehälter sind außerdem derart angeordnet, dass die Roboterarme in Bezug auf die Hauptachse über dem Quellbehälter und dem Zielbehälter hinweg schwenkbar sind. Insofern sind jeweilige Verlagerungsebenen der Roboterarme um die Hauptachse insbesondere von einer Oberkante des Quellbehälters und einer Oberkante des Zielbehälters entlang der Hauptachse beabstandet.

Der wenigstens eine Quellbehälter und der wenigstens eine Zielbehälter sind außerdem derart angeordnet, dass die Roboterarme eine Nullstellung einnehmen können, in welcher sich die Roboterarme bei Blick entlang der Hauptachse weder über dem Quellbehälter noch über dem Zielbehälter befinden. Die Roboterarme sind in der Nullstellung insofern insbesondere derart angeordnet, dass Projektionen der Roboterarme entlang der Hauptachse auf eine Behälterebene, in welcher die Behälter angeordnet sind, die Behälter nicht schneiden. In dieser Nullstellung sind Quellbehälter und Zielbehälter insbesondere von oben frei zugänglich.

Die Handhabungsanlage umfasst außerdem eine Erkennungseinrichtung, welche dazu ausgebildet ist, den Quellbehälter und/oder den Zielbehälter sowie optional darin angeordnete Gegenstände zu charakterisieren. Die Erkennungseinrichtung umfasst eine, insbesondere in Bezug auf die Hauptachse oberhalb des Quellbehälters angeordnete, Quellbehälter-Erfassungseinheit. Die Quellbehälter-Erfassungseinheit ist dazu ausgebildet, den Quellbehälter und optional darin vorgesehene bzw. aufgenommene Gegenstände, insbesondere optische bzw. bildlich, zu erfassen. Beispielsweise kann die Quellbehälter-Erfassungseinheit eine Kamera umfassen.

Die Erkennungseinrichtung umfasst außerdem eine, insbesondere in Bezug auf die Hauptachse oberhalb des Zielbehälters angeordnete, Zielbehälter-Erfassungseinheit. Die Zielbehälter-Erfassungseinheit ist dazu ausgebildet, den Zielbehälter und optional darin vorgesehene bzw. darin aufgenommene Gegenstände, insbesondere optische bzw. bildlich, zu erfassen. Beispielsweise kann die Zielbehälter-Erfassungseinheit eine Kamera umfassen.

Die Quellbehälter-Erfassungseinheit und die Zielbehälter-Erfassungseinheit sind vorzugweise derart angeordnet, dass die Roboterarme zwischen Quellbehälter und Quellbehälter-Erfassungseinheit sowie zwischen Zielbehälter und Zielbehälter-Erfassungseinheit durchschwenkbar sind. Insofern können die Roboterarme, der Quellbehälter, der Zielbehälter, die Quellbehälter-Erfassungseinheit und die Zielbehälter-Erfassungseinheit derart relativ zueinander angeordnet sein, dass jeweilige Verlagerungsebenen der Roboterarme um die Hauptachse zwischen einer Behälterebene, in welcher die Behälter angeordnet sind, und einer Erfassungseinheitenebene, in welcher die Erfassungseinheiten angeordnet sind, angeordnet ist.

Gemäß dem Verfahren werden die Roboterarme derart um die Hauptachse verschwenkt, dass jeder Roboterarm abwechselnd den Quellbehälter und den Zielbehälter anfährt. Es ist beispielsweise denkbar, dass die Roboterarme zwischen Quellbehälter und Zielbehälter hin und her fahren. Die Roboterarme können insofern nach Anfahren eines Behälters einen Richtungswechsel in ihrer Bewegung um die Hauptachse vollziehen. Es ist aber auch denkbar, dass die Roboterarme in gleicher Richtung um die Hauptachse verfahren, insbesondere eine Kreisbewegung um die Hauptachse ausführen, was ein abwechselndes Anfahren von Quellbehälter und Zielbehälter ohne Richtungswechsel ermöglicht. Im vorliegenden Zusammenhang meint der Begriff "Anfahren" insbesondere, dass die Roboterarme über den Quellbehälter bzw. über den Zielbehälter verfahren werden, insbesondere derart, dass Gegenstände aus dem Quellbehälter gegriffen werden können bzw. Gegenstände in den Zielbehälter abgelegt werden können. Vorzugsweise wird dann, wenn ein Roboterarm den Quellbehälter angefahren hat, ein Gegenstand mittels des Endeffektors dieses Roboterarms aus dem Quellbehälter gegriffen. Vorzugsweise wird dann, wenn ein Roboterarm den Zielbehälter angefahren hat, für den Fall, dass an dem Endeffektor dieses Roboterarms ein Gegenstand gehalten ist, dieser Gegenstand in den Zielbehälter abgelegt.

Eine Bewegung der Roboterarme, insbesondere um die Hauptachse, ist derart synchronisiert, dass dann, wenn der erste Roboterarm den Quellbehälter anfährt, der zweite Roboterarm den Zielbehälter anfährt und umgekehrt. Insofern werden die Roboterarme insbesondere derart bewegt, dass die Roboterarme nicht gemeinsam den gleichen Behälter anfahren, also nicht zur gleichen Zeit über dem gleichen Behälter angeordnet sind. Insbesondere werden die Roboterarme jeweils in die gleiche Richtung um die Hauptachse verschwenkt. Insbesondere wird der Roboter derart angesteuert, dass mit dem jeweiligen Endeffektor einen Gegenstand aus dem Quellbehälter gegriffen wird und dieser Gegenstand in den Zielbehälter ablegt.

Gemäß dem vorgeschlagenen Verfahren durchlaufen die Roboterarme bei ihrer jeweiligen Bewegung von Quellbehälter zu Zielbehälter bzw. von Zielbehälter zu Quellbehälter die oben beschriebene Nullstellung. Insbesondere sind die Bewegungen der Roboterarme derart synchronisiert sind, dass die Roboterarme bei ihrer jeweiligen Bewegung von Quellbehälter zu Zielbehälter bzw. von Zielbehälter zu Quellbehälter eine Konfiguration einnehmen, in welcher der Quellbehälter durch die Quellbehälter-Erfassungseinheit und der Zielbehälter durch die Zielbehälter-Erfassungseinheit frei erfassbar sind, also eine Sicht von der Quellbehälter-Erfassungseinheit auf den Quellbehälter und eine Sicht von der Zielbehälter-Erfassungseinheit auf den Zielbehälter nicht durch die Roboterarme gestört ist.

Befinden sich die Roboterarme in der Nullstellung, wird gemäß dem Verfahren der Quellbehälter und/oder der Zielbehälter mittels der Erkennungseinrichtung charakterisiert, insbesondere bildlich erfasst. Insbesondere wird der Quellbehälter mittels der Quellbehälter-Erfassungseinheit erfasst und/oder der Zielbehälter mittels der Zielbehälter-Erfassungseinheit erfasst. Beispielsweise wird dann, wenn sich die Roboterarme in der Nullstellung befinden, ein Bild von dem Quellbehälter und/oder ein Bild von dem Zielbehälter erfasst. Vorzugsweise werden auch optional in dem Quellbehälter und/oder dem Zielbehälter aufgenommene Gegenstände mittels der Erkennungseinrichtung charakterisiert.

Gemäß dem vorgeschlagenen Verfahren können Gegenstände auf effiziente Weise und mit hoher Greifleistung aus dem Quellbehälter in den Zielbehälter verbracht werden, was beispielsweise beim Kommissionieren von Waren von großem Vorteil sein kann. Hierzu trägt insbesondere auch bei, dass die Roboterarme eine Scara-Kinematik (Abkürzung für "Selective Compliance Assembly Robot Arm") aufweisen, was vergleichsweise schnelle und wiederholgenaue Bewegungen ermöglicht. Dadurch, dass die Roboterarme in die gleiche Richtung um die Hauptachse verschwenkt werden, kann eine Kollision der Roboterarm vermieden werden. Dadurch, dass die Roboterarme bei ihrer Überführung von dem Quellbehälter zu dem Zielbehälter bzw. umgekehrt eine Nullstellung durchlaufen, ist es möglich, den Quellbehälter und/oder den Zielbehälter mittels der Erkennungseinrichtung zu erfassen und auf diese Weise die Behälter und/oder deren Inhalt zu charakterisieren, was eine einfache Prozessüberwachung ermöglicht.

Im Rahmen einer besonders vorteilhaften Ausgestaltung können der wenigstens eine Quellbehälter und der wenigstens eine Zielbehälter einander gegenüberliegend in Bezug auf die Hauptachse angeordnet sein. Dann können sich die Roboterarme in der Nullstellung in einer Schwenklage zwischen Quellbehälter und Zielbehälter befinden. Bei einer solchen Ausgestaltung wird insofern die Nullstellung bei einer Schwenkbewegung eines Roboterarms von dem Quellbehälter zu dem Zielbehälter, bzw. von dem Zielbehälter zu dem Quellbehälter automatisch durchlaufen. Insbesondere ist es denkbar, dass das charakterisieren des Quellbehälters und/oder des Zielbehälters mittels der Erkennungseinrichtung im Zuge einer Schwenkbewegung der Roboterachse um die Hauptachse erfolgt. Es ist insbesondere möglich, den Quellbehälter und/oder den Zielbehälter zu erfassen, ohne dass eine Bewegung der Roboterarme um die Hauptachse gestoppt werden muss.

Gemäß einer besonders vorteilhaften Ausgestaltung des Verfahrens werden die Roboterarme zunächst in die Nullstellung überführt (Schritt a). Insbesondere werden die Roboterarme derart um die Hauptachse verschwenkt, dass die Roboterarme eine Stellung einnehmen, in welcher sich die Roboterarme bei Blick entlang der Hauptachse weder über dem Quellbehälter noch über dem Zielbehälter befinden.

In einem weiteren Schritt (Schritt b) wird der Quellbehälter und/oder der Zielbehälter mittels der Erkennungseinrichtung charakterisiert. Insbesondere wird der Quellbehälter mittels der Quellbehälter-Erfassungseinheit erfasst und/oder der Zielbehälter wird mittels der Zielbehälter-Erfassungseinheit erfasst. Beispielsweise ist es denkbar, dass wenigstens ein Bild von dem Quellbehälter, insbesondere mittels der Quellbehälter-Erfassungseinheit, und/oder ein Bild des Zielbehälters, insbesondere mittels der Zielbehälter-Erfassungseinheit, erfasst wird.

In einem weiteren Schritt (Schritt c) werden die Roboterarme sodann in einer ersten Richtung um die Hauptachse (beispielsweise im Uhrzeigersinn) derart verschwenkt, dass der erste Roboterarm den Quellbehälter anfährt und der zweite Roboterarm den Zielbehälter anfährt. Die Roboterarme fahren insofern jeweils einen unterschiedlichen Behälter an.

In einem weiteren Schritt (Schritt d) wird eine Greifaktion oder Ablegeaktion mittels der Endeffektoren durchgeführt. Im konkreten wird mittels des Endeffektors des ersten Roboterarms (also desjenigen Roboterarms, welcher den Quellbehälter angefahren hat) ein Gegenstand aus dem Quellbehälter gegriffen. Zu diesem Zweck ist es denkbar, dass der Endeffektor des ersten Roboterarms entlang einer zu der Hauptachse parallelen, insbesondere vertikalen Achse verlagert wird, beispielsweise durch die vorstehend erwähnte Spindel. Für den Fall, dass an dem Endeffektor des zweiten Roboterarms ein Gegenstand gehalten ist, wird dieser Gegenstand in den Zielbehälter abgelegt. Zu diesem Zweck ist es denkbar, dass der Endeffektor des zweiten Roboterarms entlang einer zu der Hauptachse parallelen, insbesondere vertikalen Achse verlagert wird, beispielsweise durch die vorstehend erwähnte Spindel.

Vorzugsweise erfolgt das Verschwenken der Roboterarme in Schritt c) und/oder das Greifen oder Ablegen der Gegenstände in Schritt d) in Abhängigkeit von Schritt b).

In einem weiteren Schritt (Schritt e) werden die Roboterarme erneut in die Nullstellung überführt, insbesondere durch Verschwenken der Roboterarme in der ersten Richtung oder in einer zu der ersten Richtung entgegengesetzten zweiten Richtung (bspw. im Gegenuhrzeigersinn) um die Hauptachse.

In einem weiteren Schritt (Schritt f) wird sodann der Quellbehälter und/oder der Zielbehälter erneut mittels der Erkennungseinrichtung charakterisiert. Insbesondere wird der Quellbehälter mittels der Quellbehälter-Erfassungseinheit erfasst und/oder der Zielbehälter wird mittels der Zielbehälter-Erfassungseinheit erfasst. Vorzugsweise wird wenigstens ein Bild des Quellbehälters, insbesondere mittels der Quellbehälter-Erfassungseinheit, und/oder ein Bild des Zielbehälters, insbesondere mittels der Zielbehälter-Erfassungseinheit, erfasst.

In einem weiteren Schritt (Schritt g) werden die Roboterarme sodann in der ersten Richtung oder in einer zu der ersten Richtung entgegengesetzten zweiten Richtung um die Hauptachse (bspw. im Uhrzeigersinn) derart verschwenkt, dass der erste Roboterarm den Zielbehälter anfährt und der zweite Roboterarm den Quellbehälter anfährt.

In einem weiteren Schritt (Schritt h) wird mittels des Endeffektors des zweiten Roboterarms (also desjenigen Roboterarms, welcher den Quellbehälter angefahren hat) ein Gegenstand aus dem Quellbehälter gegriffen. Zu diesem Zweck ist es denkbar, dass der Endeffektor des zweiten Roboterarms entlang einer zu der Hauptachse parallelen, insbesondere vertikalen Achse verlagert wird, beispielsweise durch die vorstehend erwähnte Spindel. Außerdem wird für den Fall, dass an dem Endeffektor des ersten Roboterarms ein Gegenstand angeordnet ist, dieser Gegenstand in den Zielbehälter abgelegt. Vorzugsweise wird der in Schritt c) mittels des Endeffektors des ersten Roboterarm gegriffene Gegenstand in den Zielbehälter abgelegt. Zu diesem Zweck ist es denkbar, dass der Endeffektor des ersten Roboterarms entlang einer zu der Hauptachse parallelen, insbesondere vertikalen Achse verlagert wird, beispielsweise durch die vorstehend erwähnte Spindel.

Vorzugsweise erfolgt das Verschwenken der Roboterarme in Schritt g) und/oder das Greifen oder Ablegen der Gegenstände in Schritt h) in Abhängigkeit von Schritt f).

Wie bereits erwähnt, kann durch das Charakterisieren des Quellbehälters und des Zielbehälters der Handhabungsprozess "on the fly" auf einfache Weise überwacht werden, bspw. dahingehend, ob oder wie viele Gegenstände in den jeweiligen Behältern noch bzw. bereits angeordnet sind. Besonders vorteilhaft ist es jedoch, wenn der Roboter, insbesondere eine Schwenkbewegung der Roboterarme um die Hauptachse, in Abhängigkeit eines Ergebnisses der von der Erkennungseinrichtung durchgeführten Charakterisierung des Quellbehälters und/oder des Zielbehälters angesteuert wird. Insbesondere kann das Anfahren der Roboterarme an den Quellbehälter oder den Zielbehälter, vorzugsweise eine Zielposition der Roboterarme über dem Quellbehälter oder dem Zielbehälter, in Abhängigkeit eines Ergebnisses der Charakterisierung des Quellbehälters oder des Zielbehälters erfolgen. Besonders vorteilhaft ist es, wenn auch das Greifen eines Gegenstands aus dem Quellbehälter und/oder das Ablegen eines Gegenstandes in den Zielbehälter in Abhängigkeit eines Ergebnisses der Charakterisierung des Quellbehälters oder des Zielbehälters erfolgt. Bei der vorstehend beschriebenen Ausgestaltung des Verfahrens kann insofern das Verschwenken der Roboterarme in Schritt c) und/oder das Greifen oder Ablegen eines Gegenstands in Schritt d) in Abhängigkeit von Schritt b) erfolgen und das Verschwenken der Roboterarme in Schritt g) und/oder das Greifen oder Ablegen eines Gegenstands in Schritt h) in Abhängigkeit von Schritt f) erfolgen. Auf diese Weise kann die Handhabungsanlage besonders effizient und störungsfrei betrieben werden, da Fehlgriffe oder das Ablegen an ungeeigneten Positionen in dem Zielbehälter vermieden werden können.

Im Rahmen einer vorteilhaften Weiterbildung kann die Erkennungseinrichtung, insbesondere die Quellbehälter Erfassungseinheit, dazu ausgebildet sein, Gegenstands-Informationen zu einem oder mehreren in dem Quellbehälter aufgenommenen Gegenständen zu ermitteln. Beispielsweise ist es denkbar, dass die Erkennungseinrichtung, insbesondere die Quellbehälter-Erfassungseinheit, dazu ausgebildet ist, eine Geometrie, insbesondere eine Außenform, und/oder Position und Lage eines oder mehrerer der in dem Quellbehälter aufgenommenen Gegenstände zu ermitteln, insbesondere zu erkennen. Zu diesem Zweck kann die Erkennungseinrichtung eine Datenverarbeitungsanlage umfassen. Beispielsweise ist es denkbar, dass mittels der Quellbehälter-Erfassungseinheit zunächst ein Bild des Quellbehälters und der darin angeordneten Gegenstände erfasst wird und anschließend mit Methoden der Bildbearbeitung Gegenstands-Informationen zu einem oder mehreren der Gegenstände ermittelt werden. Um ein besonders zuverlässiges Handhaben der Gegenstände zu ermöglichen, kann das Charakterisieren des Quellbehälters insofern das Ermitteln, insbesondere Erkennen, von Gegenstands-Informationen zu einem oder mehreren von in dem Quellbehälter angeordneten Gegenständen umfassen. Eine solche Ausgestaltung ermöglicht eine präzise Ansteuerung der Handhabungsanlage und eine detaillierte Prozessüberwachung.

Gemäß einer vorteilhaften Weiterbildung kann das Ermitteln der Gegenstands-Informationen das Ermitteln, insbesondere Erkennen, einer Geometrie, insbesondere Außenform, und/oder Position und Lage eines oder mehrerer der in dem Quellbehälter angeordneten Gegenstände umfassen. Insofern können die Gegenstands-Informationen Informationen zu einer Geometrie, insbesondere Außenform, und/oder Position und Lage eines oder mehrerer Gegenstände umfassen. Für einen zuverlässigen und schnellen Greifprozess kann es außerdem vorteilhaft sein, wenn das Ermitteln der Gegenstands-Informationen das Ermitteln eines Greifpunktes auf einem zu greifenden Gegenstand oder zu greifenden Gegenständen umfasst. Insofern können die Gegenstands-Informationen auch Informationen zu einem möglichen Greifpunkt auf dem Gegenstand oder den Gegenständen umfassen.

Wie vorstehend bereits erwähnt, kann es besonders vorteilhaft sein, wenn das Verschwenken der Roboterarme, insbesondere das Anfahren der Roboterarme an den Quellbehälter, in Abhängigkeit einer von der Erkennungseinrichtung ermittelten Gegenstands-Information zu einem zu greifenden Gegenstand in dem Quellbehälter erfolgt, insbesondere in Abhängigkeit einer Geometrie, Position und Lage und/oder eines Greifpunktes des Gegenstands.

Um auch das Ablegen eines Gegenstandes effizient und zielgerichtet durchführen zu können, kann es außerdem vorteilhaft sein, wenn die Erkennungseinrichtung, insbesondere die Zielbehälter-Erfassungseinheit, dazu ausgebildet ist, eine Position eines geeigneten Ablageortes (Ablageposition) in dem Zielbehälter zu ermitteln, insbesondere zu erkennen. Insofern kann der Schritt des Charakterisierens des Zielbehälters mittels der Erkennungseinrichtung das Ermitteln oder Erkennen einer geeigneten Ablageposition in dem Zielbehälter umfassen, insbesondere für einen zu diesem Zeitpunkt von dem Roboter gegriffenen Gegenstand. In vorteilhafter Weise kann dann in den oben genannten Schritten d) und h) der Gegenstand an der ermittelten Ablageposition in dem Zielbehälter abgelegt werden. Das Ermitteln der Ablageposition kann insbesondere das Erkennen einer Ablageposition mittels der Zielbehälter-Erfassungseinheit umfassen. Das Ermitteln der Ablageposition kann beispielsweise das Erfassen eines Bildes des Zielbehälters durch die Zielbehälter-Erfassungseinheit und das anschließende Analysieren dieses Bildes mittels Methoden der Bildverarbeitung umfassen.

In vorteilhafter Weise kann dann das Anfahren der Roboterarme an den Zielbehälter und/oder das Ablegen eines Gegenstands in den Zielbehälter in Abhängigkeit einer von der Erkennungseinrichtung ermittelten Ablageposition in dem Zielbehälter erfolgen. Insbesondere erfolgt das Verschwenken desjenigen Roboterarms, welcher den Quellbehälter anfährt in Abhängigkeit eines zuvor von der Erkennungseinrichtung ermittelten Greifpunktes auf einem zu greifenden Gegenstand in dem Quellbehälter und das Verschwenken desjenigen Roboterarms, welcher den Zielbehälter anfährt, erfolgt in Abhängigkeit einer zuvor ermittelten oder erkannten Ablageposition in dem Zielbehälter.

Das Ermitteln der Ablageposition kann beispielsweise das Auswählen einer Ablageposition aus einer Mehrzahl von mittels der Erkennungseinrichtung ermittelten bzw. erkannten Ablagepositionen umfassen. Das Auswählen der Ablageposition kann insbesondere in Abhängigkeit einer oder mehrerer Randbedingungen erfolgen. Eine solche Randbedingung kann beispielsweise die Beschaffenheit oder Geometrie, insbesondere Größe und/oder Außenform, eines zu diesem Zeitpunkt von dem Roboter gehaltenen Gegenstands umfassen. Alternativ oder ergänzend kann auch eine Beschaffenheit, Geometrie, insbesondere Größe und/oder Außenform, und/oder Position und Lage eines oder mehrerer der zu diesem Zeitpunkt bereits in dem Zielbehälter angeordneten Gegenstände eine solche Randbedingung bilden. Auf diese Weise kann beispielsweise vermieden werden, dass ein schwerer Gegenstand oder großer Gegenstand auf einen kleinen oder beispielsweise leicht zerbrechlichen Gegenstand abgelegt wird.

Im Rahmen eines allgemeinen Aspekts können die Endeffektoren oder zumindest eine Teilmenge der Endeffektoren jeweils über eine Kopplungseinrichtung, insbesondere wiederholbar lösbar, mit dem entsprechenden Roboterarm, insbesondere mit der vorstehend erwähnten Spindel, verbunden sein, wobei der jeweilige Endeffektor um eine Schwenkachse relativ zu demjenigen Roboterarm / Spindel schwenkbar ist, an welchem / welcher der Endeffektor über die Kopplungseinrichtung angekoppelt ist. Die Schwenkachse ist insbesondere zu der Hauptachse orthogonal orientiert, vorzugsweise horizontal. Dann kann gemäß einem weiteren Schritt des Verfahrens vor dem Greifen eines Gegenstands aus dem Quellbehälter und/oder vor dem Ablegen eines Gegenstands in den Zielbehälter (vgl. Schritte d) und h) oben) der entsprechende Endeffektor um die Schwenkachse verschwenkt werden. Insbesondere kann eine Schwenkbewegung des Endeffektors um die Schwenkachse in Abhängigkeit einer zuvor ermittelten Gegenstands-Information zu einem zu greifenden Gegenstand oder in Abhängigkeit einer Ablageposition in dem Zielbehälter erfolgen. Auf diese Weise können auch Gegenstände in unterschiedlichen Positionen und Lagen zuverlässig gegriffen und abgelegt werden, was insbesondere beim "bin-picking" von Vorteil ist. Zu diesem Zweck umfasst die Handhabungsanlage vorzugsweise außerdem entsprechende Antriebseinrichtungen zum Antreiben einer jeweiligen Schwenkbewegung eines Endeffektors um die jeweilige Schwenkachse.

Wie vorstehend erwähnt, weisen die Roboterarme jeweils eines Scara-Kinematik auf. Vorzugsweise weisen die Roboterarme jeweils drei nacheinander angeordnete Glieder auf. Ein jeweils erstes Glied kann dann um die Hauptachse schwenkbar sein. Im Rahmen einer vorteilhaften Weiterbildung des Verfahrens kann dann eine Bewegung der Roboterarme um die Hauptachse derart synchronisiert sein, dass ein zwischen dem ersten Glied des ersten Roboterarms und dem ersten Glied des zweiten Roboterarms eingeschlossener (spitzer) Winkel um die Hauptachse nicht kleiner ist als 120°, insbesondere nicht kleiner als 140°, weiter insbesondere nicht kleiner als 160°, weiter insbesondere nicht kleiner als 170°, weiter insbesondere nicht kleiner als 175°, ist. Auf diese Weise kann das Risiko reduziert werden, dass es zu Kollisionen zwischen den Roboterarmen oder zwischen an den Roboterarmen gehaltenen Gegenständen kommt. Darüber hinaus ist bei einer solchen Ausgestaltung ein von den Roboterarmen bedeckter Winkelbereich um die Hauptachse begrenzt, sodass ein Zwischenraum zwischen Quellbehälter und Zielbehälter vergleichsweise schmal sein und trotzdem eine Nullstellung eingenommen werden kann.

Gemäß einem weiteren allgemeinen Aspekt kann es vorteilhaft sein, wenn die Erkennungseinrichtung weitere Erfassungseinheiten, insbesondere weitere Kameras, umfasst. Besonders vorteilhaft kann es sein, wenn an jedem Roboterarm eine dieser weiteren Erfassungseinheiten angeordnet ist und insofern mit dem Roboterarm mit verschwenkbar ist. Die weiteren Erfassungseinheiten können insbesondere angeordnet und ausgebildet sein, um ein an einem Endeffektor eines Roboterarms gehaltenen Gegenstand zu überwachen. Insbesondere kann gemäß dem Verfahren ein an einem Endeffektor eines Roboterarms gehaltener Gegenstand, insbesondere dessen Position und/oder Lage, mittels der weiteren an diesem Roboterarm angeordneten Erfassungseinheit erfasst, insbesondere überwacht, werden. Es ist auch denkbar, dass die weiteren Erfassungseinheiten oder eine Teilmenge dieser dazu ausgebildet sind, einen Barcode auf einem Gegenstand zu erkennen.

Die vorstehend beschriebene Aufgabe wird auch durch eine Handhabungsanlage gemäß Anspruch 13 gelöst. Die Handhabungsanlage ist dazu ausgebildet, eines der vorstehend beschriebenen Verfahren durchzuführen.

Die Handhabungsanlage umfasst einen Roboter mit einem ersten Roboterarm und einem zweiten Roboterarm. Es ist auch denkbar, dass der Roboter mehr als zwei Roboterarme aufweist. An den Roboterarmen ist jeweils ein Endeffektor zum Greifen jeweils eines Gegenstands angeordnet. Die Roboterarme sind um eine gemeinsame, insbesondere vertikale, Hauptachse schwenkbar. Die Roboterarme weisen jeweils eine Scara-Kinematik, insbesondere 4-Achs-Scara-Kinematik auf. Die Handhabungsanlage umfasst außerdem wenigstens einen Quellbehälter zur Aufnahme von Gegenständen. Insbesondere kann die Handhabungsanlage einen Quellbehälter mit einer Mehrzahl von darin angeordneten Gegenständen umfassen. Die Handhabungsanlage umfasst außerdem wenigstens einen Zielbehälter zur Aufnahme von Gegenständen. Der wenigstens eine Quellbehälter und der wenigstens eine Zielbehälter sind derart, insbesondere entlang eines Umfangs, um die Hauptachse verteilt angeordnet, dass die Roboterarme, insbesondere voneinander unabhängig, Gegenstände aus dem Quellbehälter greifen können und in den Zielbehälter überführen und dort ablegen können. Der wenigstens eine Quellbehälter und der wenigstens eine Zielbehälter sind außerdem derart angeordnet, dass die Roboterarme in Bezug auf die Hauptachse über dem Quellbehälter und dem Zielbehälter hinweg schwenkbar sind. Außerdem sind der wenigstens eine Quellbehälter und der wenigstens eine Zielbehälter derart angeordnet, dass die Roboterarme eine Nullstellung einnehmen können, in welcher sich die Roboterarme bei Blick von oben entlang der Hauptachse wieder über dem Quellbehälter noch über dem Zielbehälter befinden.

Die Handhabungsanlage umfasst außerdem eine Erkennungseinrichtung. Die Erkennungseinrichtung umfasst eine, insbesondere in Bezug auf die Hauptachse oberhalb des Quellbehälters angeordnete, Quellbehälter-Erfassungseinheit, welche dazu ausgebildet ist, den Quellbehälter und optional darin vorgesehene bzw. aufgenommene Gegenstände, insbesondere optische bzw. bildlich zu erfassen. Beispielsweise kann die Quellbehälter-Erfassungseinheit eine Kamera umfassen. Die Erkennungseinrichtung umfasst außerdem eine, insbesondere in Bezug auf die Hauptachse oberhalb des Zielbehälters angeordnete, Zielbehälter-Erfassungseinheit, welche dazu ausgebildet ist, den Zielbehälter und optional darin vorgesehene bzw. darin aufgenommene Gegenstände, insbesondere optische bzw. bildlich, zu erfassen. Beispielsweise kann die Zielbehälter-Erfassungseinheit eine Kamera umfassen.

Die Handhabungsanlage umfasst außerdem eine Steuereinrichtung zur Ansteuerung der Handhabungsanlage, insbesondere zur Ansteuerung des Roboters und/oder der Erkennungseinrichtung. Die Steuereinrichtung ist dazu eingerichtet, eines der vorstehend beschriebenen Verfahren durchzuführen.

Die vorstehend im Zusammenhang mit dem Verfahren beschriebenen Vorteile und optionalen Merkmale der Handhabungsanlage können auch zur Ausgestaltung der Handhabungsanlage gemäß Anspruch 13 dienen, sodass zur Vermeidung von Wiederholungen auf vorstehende Offenbarung hierzu verwiesen wird.

Im Rahmen einer vorteilhaften Ausgestaltung sind der Quellbehälter und der Zielbehälter einander gegenüberliegend in Bezug auf die Hauptachse angeordnet.

Es ist denkbar, dass jeder Roboterarm Teil einer eigenen Robotereinheit ist. Beispielsweise ist es möglich, dass der Roboter eine erste Scara-Robotereinheit umfasst, welche den ersten Roboterarm bereitstellt, und dass der Roboter eine, insbesondere von der ersten Scara-Robotereinheit separate, insbesondere räumlich getrennte, zweite Scara-Robotereinheit umfasst, welche den zweiten Roboterarm bereitstellt. Die erste Scara-Robotereinheit und die zweites Scara-Robotereinheit sind dann vorzugsweise derart angeordnet, dass die Schwenkachsen der Roboterarme koaxial verlaufen, sodass die Roboterarme um eine gemeinsame Hauptachse schwenkbar sind.

Es ist auch denkbar, dass der erste und der zweite Roboterarm an einer gemeinsamen Roboterbasis gelagert sind. Beispielsweise ist es denkbar, dass der Roboter eine Roboterbasis aufweist, wobei der erste Roboterarm und der zweite Roboterarm um die Hauptachse schwenkbar an der Roboterbasis befestigt sind. Insbesondere können der erste Roboterarm und der zweite Roboterarm über eine gemeinsame Lagerung an der Roboterbasis gelagert sein.

Wie vorstehend bereits erwähnt, kann es vorteilhaft sein, wenn die Roboterarme jeweils eine Spindel aufweisen. Die Spindel kann insbesondere zum Antrieb einer translatorischen und/oder einer rotatorischen Stellbewegung bezüglich einer zu der Hauptachse parallelen, insbesondere vertikalen, Spindelachse ausgebildet sein. Beispielsweise kann die Spindel als Kugelrollspindel ausgebildet sein. Insbesondere ist der jeweilige Endeffektor an der Spindel, insbesondere an einem Ende der Spindel, angeordnet. Ein solcher Spindelantrieb ermöglicht schnelle und wiederholgenaue Bewegungen, was sich positiv auf einer Greifleistung auswirkt.

Im Rahmen einer vorteilhaften Ausgestaltung können die Roboterarme jeweils drei nacheinander angeordnete Glieder aufweisen. Insbesondere kann ein jeweils erstes Glied eines Roboterarms um eine der Hauptachse entsprechende erste Achse schwenkbar, insbesondere drehbar, sein. Bei einer Ausgestaltung mit zwei Robotereinheiten kann das erste Glied jeweils um die erste Achse schwenkbar mit der jeweiligen Roboterbasis verbunden sein. Die Robotereinheiten können dann insbesondere derart angeordnet sein, dass die ersten Achsen koaxial verlaufen und somit eine gemeinsame Hauptachse bilden. Ein jeweils zweites Glied kann um eine jeweilige zweite Achse schwenkbar, insbesondere drehbar, mit dem ersten Glied des entsprechenden Roboterarms verbunden sein. Ein jeweils drittes Glied kann dann durch die vorstehend erwähnte Spindel bereitgestellt sein. Insofern kann die Spindel eines jeweiligen Roboterarms das dritte Glied dieses Roboterarms bilden. Vorzugsweise kann die Spindel eines Roboterarms um eine jeweilige Spindelachse (dritte Achse) drehbar mit dem zweiten Glied dieses Roboterarms verbunden sein. Die Spindel kann insbesondere derart um die Spindelachse drehbar gelagert sein, dass sie, insbesondere voneinander unabhängig, sowohl eine reine Drehbewegung um die Spindelachse als auch eine translatorische Bewegung entlang der Spindelachse ausführen kann. Insbesondere kann sich die Spindel eines jeweiligen Roboterarms mit einer Hauptlängsachse entlang der jeweiligen Spindelachse erstrecken.

Der Roboter umfasst vorzugsweise entsprechende Antriebe, um eine Schwenkbewegung der Glieder um die jeweiligen Achsen anzutreiben. Eine Antriebseinrichtung und/oder Getriebeeinrichtung der Spindel kann in dem jeweils zweiten Glied des Roboterarms angeordnet sein.

In vorteilhafter Weise können die erste Achse, die zweite Achse und die Spindelachse eines Roboterarms, insbesondere aller Roboterarme, zueinander parallel, insbesondere vertikal verlaufen. Eine solche Ausgestaltung begünstigt eine parallele Bewegung der einzelnen Roboterarme. Insofern können die ersten und zweiten Glieder der Roboterarme entlang paralleler, insbesondere horizontaler, Verlagerungsebenen schwenkbar sein.

Um das Greifen von Gegenständen aus einer gemeinsamen Lagerungsebene, bspw. aus einer Mehrzahl von auf einem Gebäudeboden stehenden Behältern, zu erleichtern, kann es ferner vorteilhaft sein, wenn die zweiten Glieder der Roboterarme derart ausgebildet sind, dass die Lagerungspunkte der Spindeln an den zweiten Gliedern auf der gleichen Höhe entlang der Hauptachse liegen.

Im Rahmen einer vorteilhaften Weiterbildung können die Endeffektoren jeweils über eine Kopplungseinrichtung, insbesondere wiederholbar lösbar, mit dem entsprechenden Roboterarm, insbesondere der jeweiligen Spindel, verbunden sein. Beispielsweise ist es denkbar, dass die Endeffektoren über eine Magnetverbindung mit dem Roboterarm, insbesondere der Spindel, verbunden sind.

Insbesondere können die Kopplungseinrichtungen jeweils derart ausgebildet sein, dass der jeweilige Endeffektor um eine Schwenkachse relativ zu dem Roboterarm / Spindel, an welchem / welcher der Endeffektor über die Kopplungseinrichtung angekoppelt ist, schwenkbar ist. Die Schwenkachse ist insbesondere zu der Hauptachse oder der Spindelachse orthogonal orientiert, vorzugsweise horizontal. Eine solche Ausgestaltung ermöglicht es, den Endeffektor auf einfache und zuverlässige Weise relativ zu dem Roboterarm zu verstellen und somit eine Orientierung des Endeffektors anzupassen, bspw. in Abhängigkeit einer Position und Lage eines zu greifenden Gegenstandes.

In diesem Zusammenhang kann es ferner vorteilhaft sein, wenn die Handhabungsanlage außerdem eine, insbesondere für jeden Roboterarm eine, Antriebseinrichtung umfasst, welche dazu ausgebildet ist, eine Schwenkbewegung des Endeffektors um die vierte Achse anzutreiben. Dies ermöglicht es, eine Orientierung des Endeffektors automatisiert zu verändern. Dann kann die vorstehend beschriebene Steuereinrichtung in vorteilhafter Weise auch dazu ausgebildet sein, die Antriebseinrichtung(en) anzusteuern.

Die Erfindung wird im Folgenden anhand der Figuren näher erläutert. Es zeigen:
- Figur 1: vereinfachte schematische Darstellung einer Ausgestaltung der Handhabungsanlage in einer Seitenansicht;
- Figur 2a,b: vereinfachte schematische Darstellungen der Handhabungsanlage gemäß Fig. 1 in einer Draufsicht mit unterschiedlichen Roboterstellungen;
- Figur 3: vereinfachte schematische Darstellung einer weiteren Ausgestaltung der Handhabungsanlage in einer Seitenansicht; und
- Figur 4: vereinfachte schematische Darstellungen einer Handhabungsanlage zur Erläuterung eines beispielhaften Verfahrens zum Handhaben von Gegenständen mittels der Handhabungsanlage.

In der nachfolgenden Beschreibung sowie in den Figuren sind für identische oder einander entsprechende Merkmale jeweils dieselben Bezugszeichen verwendet.

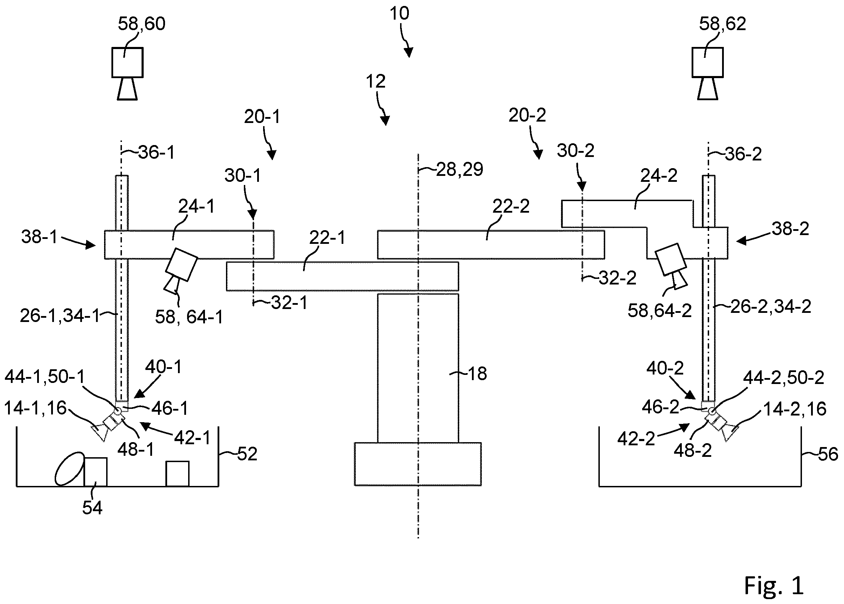

Die Figur 1 zeigt in vereinfachter schematischer Darstellung eine Ausgestaltung einer Handhabungsanlage, welche insgesamt mit dem Bezugszeichen 10 bezeichnet ist.

Die die Handhabungsanlage 10 umfasst einen Roboter 12 und eine Mehrzahl, im dargestellten Beispiel zwei, Endeffektoren 14-1, 14-2, welche von dem Roboter 12 verlagerbar sind (nachfolgend noch im Detail erläutert).

In dem dargestellten Beispiel sind die Endeffektoren 14-1, 14-2 als Sauggreifer 16 zum Ansaugen eines Gegenstands ausgebildet. Bei nicht dargestellten Ausgestaltungen ist es aber auch denkbar, dass die Endeffektoren 14-1, 14-2 oder eine Teilmenge davon als mechanische Greifer, beispielsweise als pneumatisch betätigte mechanische Greifer, ausgebildet ist.

Der Roboter 12 umfasst in dem dargestellten Beispiel eine Roboterbasis 18 und eine Mehrzahl, im dargestellten Beispiel zwei, Roboterarme 20-1, 20-2.

Die Roboterarme 20-1, 20-2 weisen jeweils eine Scara-Kinematik auf. Im konkreten Beispiel weist jeder Roboterarm 20-1, 20-2 drei nacheinander angeordnete Glieder 22-1, 22-2, 24-1, 24-2, 26-1, 26-2 auf, wobei ein drittes Glied 26-1, 26-2 durch eine Spindel 34-1, 34-2 gebildet ist. Es sind aber auch andere Ausgestaltungen denkbar.

Wie aus Figur 1 ersichtlich, sind die ersten Glieder 22-1, 22-2 der Roboterarme 20-1, 20-2 um eine erste Achse 28 schwenkbar, insbesondere drehbar, mit der Roboterbasis 18 verbunden. Die erste Achse 28 bildet insofern eine Hauptachse 29 des Roboters 12. Vorzugsweise sind die ersten Glieder 22-1, 22-2 über eine gemeinsame Lagerung an der Roboterbasis 18 gelagert. Der Roboter 12 weist insbesondere entsprechende Antriebsvorrichtungen (nicht dargestellt) zum Antreiben einer Schwenkbewegung der ersten Glieder 22-1, 22-2 der Roboterarme 20-1, 20-2 um die Hauptachse 29 auf.

Ein jeweils zweites Glied 24-1, 24-2 eines Roboterarms 20-1, 20-2 ist über ein Schwenkgelenk 30-1, 30-2 mit dem ersten Glied 22-1, 22-2 dieses Roboterarms 20-1, 20-2 verbunden und um eine jeweilige zweite Achse 32-1, 32-2 relativ zu dem ersten Glied 22-1, 22-2 schwenkbar. Vorzugsweise umfasst der Roboter 12 entsprechende Antriebsvorrichtungen (nicht dargestellt) zum Antreiben einer jeweiligen Schwenkbewegung der zweiten Glieder 24-2, 24-2 um die jeweilige zweite Achse 32-1, 32-2.

Ein jeweils drittes Glied 26-1, 26-2 eines Roboterarms 20-1, 20-2 ist durch eine Spindel 34-1, 34-2 gebildet, welche sich mit ihrer Hauptlängsachse entlang einer Spindelachse 36-1, 36-2 erstreckt. Die Spindeln 34-1, 34-2 sind um die jeweilige Spindelachse 36-1, 36-2 drehbar an dem zweiten Glied 24-1, 24-2 des jeweiligen Roboterarms 20-1, 20-2 gelagert.

Wie vorstehend erwähnt, können die Spindeln 34-1, 34-2 insbesondere als Kugelrollspindeln ausgebildet sein, welche sowohl eine Drehbewegung um die Spindelachse 36-1, 36-2 als auch eine translatorische Verschiebebewegung entlang der Spindelachse 36-1, 36-2 ausführen können. Entsprechende Antriebseinrichtungen und/oder Getriebeeinrichtungen zum Antreiben einer Bewegung der Spindeln 34-1, 34-2 können dann im jeweils zweiten Glied 24-1, 24-2 des entsprechenden Roboterarms 20-1, 20-2 vorgesehen sein.

Die Achsen 28, 32-1, 32-2, 36-1, 36-2 des Roboters 12 sind beispielhaft und bevorzugt zueinander parallel orientiert und verlaufen im Beispiel vertikal.

Wie aus Figur 1 ersichtlich, sind die ersten Glieder 22-1, 22-2 beispielhaft entlang der ersten Achse 28 zueinander versetzt angeordnet, sodass im Beispiel das erste Glied 22-1 des ersten Roboterarms 20-1 unter dem ersten Glied 22-2 des zweiten Roboterarms 20-2 durchschwenkbar ist. Um diesen axialen Versatz auszugleichen, ist in dem dargestellten Beispiel das zweite Glied 24-2 des zweiten Roboterarms 20-2 optional derart abgesetzt bzw. gekröpft ausgebildet, dass entsprechende Lagerungspunkte 38-1, 38-2 der Spindeln 34-1, 34-2 an den zweiten Gliedern 24-1, 24-2 auf derselben Höhe entlang der ersten Achse 28 / Hauptachse 29 liegen. Die Lagerungspunkte 38-1, 38-2 der Spindeln 34-1, 34-2 sind insofern auf einer gemeinsamen Ebene angeordnet, welche zu der ersten Achse 28 orthogonal orientiert ist.

Wie in Figur 1 gezeigt, sind die Endeffektoren 14-1, 14-2 an den in der Zeichnung unteren Enden 40-1, 40-2 der Spindeln 34-1, 34-2 angeordnet. Im Beispiel sind die Endeffektoren 14-1, 14-2 jeweils über eine optionale Kopplungseinrichtung 42-1, 42-2 mit der entsprechenden Spindel 34-1, 34-2 verbunden.

Die optionalen Kopplungseinrichtungen 42-1, 42-2 sind beispielhaft jeweils derart ausgebildet, dass der entsprechende Endeffektor 14-1, 14-2 um eine jeweilige Schwenkachse 44-1, 44-2 relativ zu der Spindel 34-1, 34-2 schwenkbar ist. Wie aus Figur 1 ersichtlich, ist die jeweils Schwenkachse 44-1, 44-2 beispielhaft und bevorzugt zu der Spindelachse 36-1, 36-2 (und somit auch zu der Hauptachse 29 und der zweiten Achse 32-1, 32-2) orthogonal orientiert.

Im konkreten Beispiel umfassen die Kopplungseinrichtungen 42-1, 42-2 jeweils einen Verbindungsabschnitt 46-1, 46-2 welcher, insbesondere drehfest, mit der Spindel 34-1, 34-2 verbunden ist, und einen Schwenkabschnitt 48-1, 48-2, welcher über ein Schwenkgelenk 50-1, 50-2 um die Schwenkachse 44-1, 44-2 schwenkbar an dem Verbindungsabschnitt 46-1, 46-2 gehaltert ist. An dem Schwenkabschnitt 48-1, 48-2 kann dann ein Kopplungsabschnitt angeordnet sein, über welchen der Endeffektor 14-1, 14-2 ankoppelbar ist. Beispielsweise ist es denkbar, dass der Kopplungsabschnitt als Schnellwechsel-Kupplung ausgebildet ist, welche einen wiederholtes An- und Abkoppeln eines Endeffektors 14-1, 14-2 ermöglicht.

Um den jeweiligen Schwenkabschnitt 48-1, 48-2 und somit einen daran an gekoppelten Endeffektor 14-1, 14-2 um Schwenkachse 44-1, 44-2 zu verschwenken, kann die Handhabungsanlage 10 außerdem eine, insbesondere für jeden Roboterarm 20-1, 20-2 eine, Antriebseinrichtung (nicht dargestellt) umfassen. In diesem Zusammenhang ist es bspw. denkbar, dass die Antriebseinrichtung einen elektromotorischen oder pneumatischen Antrieb umfasst.

Die Handhabungsanlage 10 umfasst außerdem einen Quellbehälter 52 zur Aufnahme von Gegenständen 54 sowie einen Zielbehälter 56 zur Aufnahme von Gegenständen 54. Die Figur 1 zeigt die Handhabungsanlage 10 in einer beispielhaften Anwendungssituation zu Beginn eines Handhabungsvorganges, bei der eine Mehrzahl von Gegenständen 54 in dem Quellbehälter 52 angeordnet ist, der Zielbehälter 56 hingegen noch leer ist. Die Gegenstände 54 können unterschiedliche Größe und Form aufweisen und sowohl geordnet als auch ungeordnet in dem Quellbehälter 52 angeordnet sein.

Wie aus Figur 1 ersichtlich, sind die Roboterarme 20-1, 20-2 derart angeordnet, dass sie in Bezug auf die Hauptachse 29 über dem Quellbehälter 52 und dem Zielbehälter 56 hinweg schwenkbar sind.

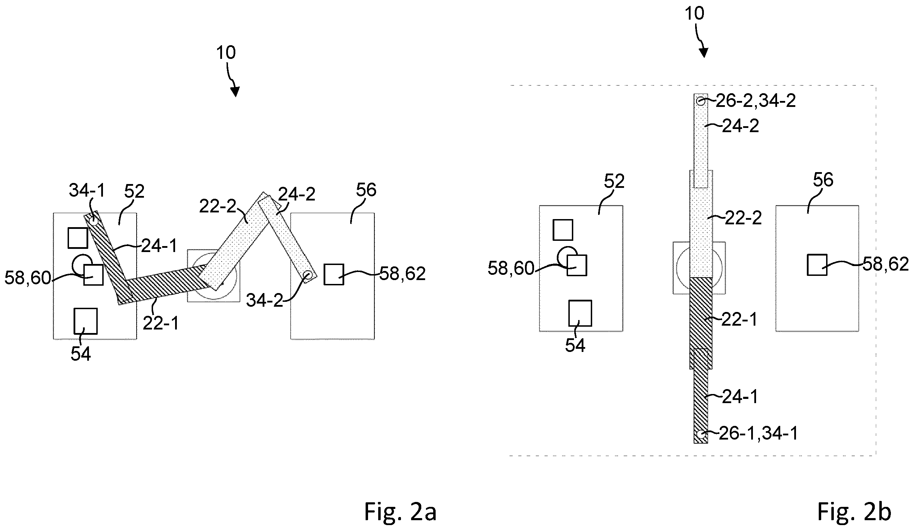

Beispielhaft und bevorzugt sind der Quellbehälter 52 und der Zielbehälter 56 in Bezug auf die Hauptachse 29 einander gegenüberliegend angeordnet (vgl. Figuren 2a und 2b).

Grundsätzlich sind aber auch andere Anordnungen von Quellbehälter 52 und Zielbehälter 56 möglich.

Der Quellbehälter 52 und der Zielbehälter 56 sind derart angeordnet, dass die Roboterarme 20-1, 20-2 mittels der Endeffektoren 14-1, 14-2 Gegenstände 54 aus dem Quellbehälter 52 greifen können und in den Zielbehälter 56 überführen können (nachfolgend noch im Detail in Bezug auf das Verfahren erläutert).

Die Figur 2a zeigt die Handhabungsanlage 10 in einer Konfiguration, in welcher der erste Roboterarm 20-1 den Quellbehälter 52 angefahren hat und der zweite Roboterarm 20-2 den Zielbehälter 56 angefahren hat. Wie aus Figur 2a ersichtlich, bedeutet dies, dass der erste Roboterarm 20-1 bei Blick von oben entlang der Hauptachse 29 (also bei Blick auf die Zeichenebene) oberhalb des Quellbehälters 52 angeordnet ist (sodass der Roboterarm 20-1 mit dem Endeffektor 14-1 Gegenstände 54 aus dem Quellbehälter 52 greifen kann) und dass der zweite Roboterarm 20-2 oberhalb des Zielbehälters 56 angeordnet ist (sodass der Roboterarm 20-2 mit dem Endeffektor 14-2 Gegenstände 54 in den Zielbehälter 56 ablegen kann).

Wie in Figur 2b gezeigt, sind der Quellbehälter 52 und der Zielbehälter 56 derart angeordnet, dass die Roboterarme 20-1, 20-2 eine in Fig. 2b gezeigte Nullstellung zwischen Quellbehälter 52 und Zielbehälter 56 einnehmen können, in welcher die Roboterarme 20-1, 20-2 bei Blick entlang der Hauptachse 29 (also bei Blick orthogonal auf die Zeichenebene) weder über dem Quellbehälter 52 noch über dem Zielbehälter 56 angeordnet sind.

Dies ermöglicht es, den Quellbehälter 52 und/oder den Zielbehälter 56 sowie optional daran angeordnete Gegenstände 54 von oben - ohne Störkontur durch die Roboterarme 20-1, 20-2 - zu erfassen und somit beispielsweise Geometrie und/oder Position und Lage von in den Behältern 52, 56 aufgenommenen Gegenständen 54 zu charakterisieren.

Zu diesem Zweck umfasst die Handhabungsanlage 10 eine Erkennungseinrichtung 58, welche dazu ausgebildet ist, den Quellbehälter 52 und den Zielbehälter 56 sowie optional daran angeordnete Gegenstände 54 zu charakterisieren.

Wie in Figur 1 gezeigt, umfasst die Erkennungseinrichtung 58 eine Quellbehälter-Erfassungseinheit 60 zum Erfassen des Quellbehälter 52. Die Quellbehälter-Erfassungseinheit 60 ist in Bezug auf die Hauptachse 29 derart oberhalb des Quellbehälters 52 angeordnet, dass die Roboterarme 20-1, 20-2 zwischen Quellbehälter 52 und Quellbehälter-Erfassungseinheit 60 durchschwenkbar ist. In analoger Weise umfasst die Handhabungsanlage 10 außerdem eine Zielbehälter-Erfassungseinheit 62 zum Erfassen des Zielbehälter 56. Wie in Figur 1 schematisch angedeutet, können die Quellbehälter-Erfassungseinheit 60 und/oder die Zielbehälter-Erfassungseinheit 62 jeweils eine Kamera umfassen.

Wie vorstehend erwähnt, kann die Quellbehälter-Erfassungseinheit 60 insbesondere dazu ausgebildet sein, Beschaffenheit, Geometrie und/oder Position und Lage eines oder mehrerer der in dem Quellbehälter 52 angeordneten Gegenstände 54 zu erkennen. Die Zielbehälter-Erfassungseinheit 62 kann dazu ausgebildet sein, eine Ablageposition für einen von dem Roboter 2 gehaltenen Gegenstand in dem Zielbehälter 56 zu erkennen. Die Zielbehälter-Erfassungseinheit 62 kann außerdem dazu ausgebildet sein, Beschaffenheit, Geometrie und/oder Position und Lage eines oder mehrerer von in dem Zielbehälter 56 angeordneten Gegenständen 54 zu erkennen.

Die Erkennungseinrichtung 58 kann weitere Einheiten umfassen, beispielsweise eine Datenverarbeitungseinheit zur Auswertung von Bilddaten. In dem dargestellten Beispiel umfasst die Erkennungseinrichtung 58 außerdem optionale weitere Erfassungseinheiten 64-1, 64-2, wobei an jedem Roboterarm 20-1, 20-2 eine dieser weiteren Erfassungseinheiten 64-1, 64-2 angeordnet ist (vgl. Fig. 1). Die weiteren Erfassungseinheiten 64-1, 64-2 sind insbesondere dazu ausgebildet, an den Endeffektoren 14-1, 14-2 gehaltene Gegenstände 54 zu überwachen.

Die Handhabungsanlage 10 umfasst außerdem eine Steuereinrichtung (nicht dargestellt) zur Ansteuerung des Roboters 12 und optional zur Ansteuerung einer optional vorgesehenen Antriebseinrichtung zum Antreiben einer Schwenkbewegung der Endeffektoren 14-1, 14-2 um Schwenkachsen 44-1, 44-2.

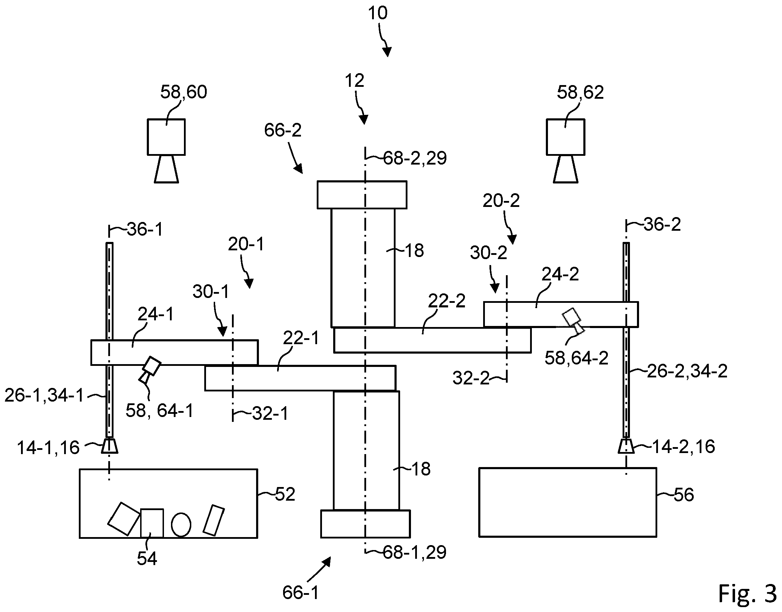

Die Figur 3 zeigt eine weitere Ausgestaltung der Handhabungsanlage 10, bei der die Roboterarme 20-1, 20-2 nicht an einer gemeinsamen Roboterbasis 18 gelagert sind, sondern jeweils Teil einer selbstständigen Robotereinheit 66-1, 66-2 sind. Die Handhabungsanlage 10 gemäß Figur 2 umfasst insofern eine erste Robotereinheit 66-1, welche den ersten Roboterarm 20-1 bereitstellt und im Beispiel als Scara-Robotereinheit ausgebildet ist, und eine zweite Robotereinheit 66-2, welche den zweiten Roboterarm 20-2 bereitstellt und im Beispiel ebenfalls als Scara-Robotereinheit ausgebildet ist.

Beispielhaft kann die erste Robotereinheit 66-1 durch einen ersten Scara-Roboter bereitgestellt sein, welcher auf einem Gebäudeboden angeordnet ist, und die zweite Robotereinheit 66-2 kann durch einen zweiten Scara-Roboter bereitgestellt sein, welcher an einem Träger, beispielsweise an einer Decke eines Gebäudes, angeordnet ist.

Wie in Fig. 3 schematisch gezeigt, weisen die Robotereinheiten 66-1, 66-2 jeweils eine Roboterbasis 18 auf, an welcher das jeweils erste Glied 22-1, 22-2 des entsprechenden Roboterarms 20-1, 20-2 um eine jeweilige erste Achse 68-1, 68-2 schwenkbar gelagert ist. Die Robotereinheiten 68-1, 68-2 sind vorzugsweise derart angeordnet, dass die ersten Achsen 68-1, 68-2 zumindest im Wesentlichen koaxial verlaufen, sodass die beiden Roboterarme 20-1, 20-2 der Robotereinheiten 66-1, 66-2 im Endeffekt um eine gemeinsame Hauptachse 29 schwenkbar sind.

Im Übrigen entspricht der Aufbau der Handhabungsanlage 10 gemäß Fig. 3 im Wesentlichen der Ausgestaltung gemäß Figur 1, sodass zur Vermeidung von Wiederholungen auf den vorstehenden Vortrag hierzu verwiesen wird. Gleiche Bezugszeichen bezeichnen dabei funktional gleiche oder ähnliche Bauteile.

In Abweichung von der von dem in Figur 1 gezeigten Beispiel sind in der Ausgestaltung gemäß Figur 3 die Endeffektoren 14-1, 14-2 beispielhaft ohne Schwenkkupplung mit den Spindeln 34-1, 34-2 verbunden. Es ist aber auch denkbar, dass bei der Handhabungsanlage 10 gemäß Figur 3 auch die in Figur 1 gezeigte Kopplungseinrichtungen 42-1, 42-2 vorgesehen sind.

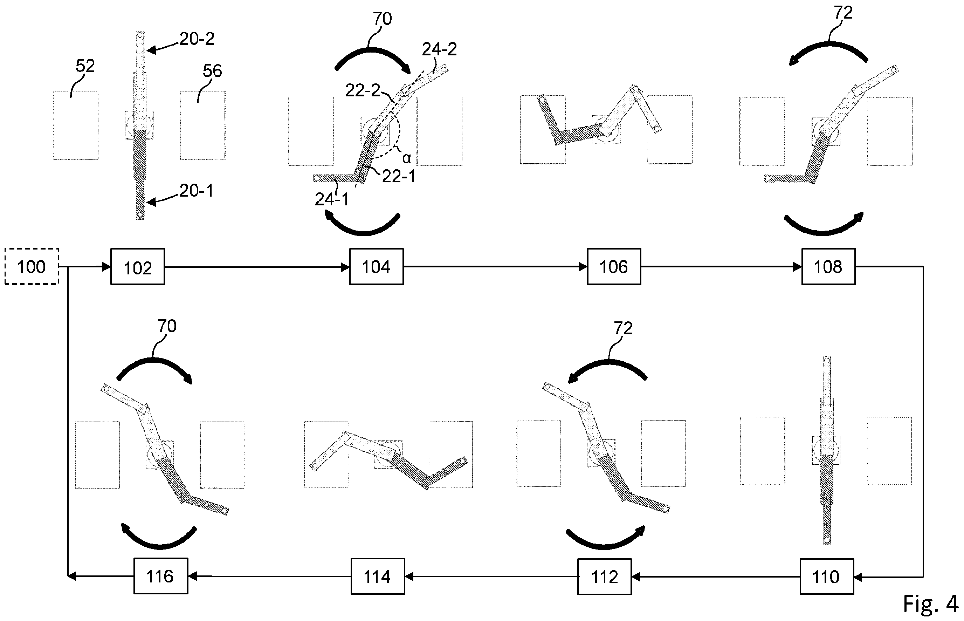

Eine vorteilhafte Ausgestaltung eines Verfahrens zum Handhaben von Gegenständen 54 mittels der Handhabungsanlage 10 wird im Folgenden in Bezug auf die Figur 4 erläutert.

In einem Anfangsschritt 100 werden die Roboterarme in die Nullstellung überführt (Schritt a).

In einem weiteren Schritt 102 (Schritt b) werden in dieser Roboterstellung der Quellbehälter 52 und/oder der Zielbehälter 56 mittels der Erkennungseinrichtung 58 charakterisiert. Insbesondere wird der Quellbehälter 52 mittels der Quellbehälter-Erfassungseinheit 60 bildlich erfasst und/oder der Zielbehälter 56 wird mittels der Zielbehälter-Erfassungseinheit 62 bildlich erfasst. Wie vorstehend erwähnt ist es insbesondere denkbar, dass in dem Schritt 102 Gegenstands-Informationen zu einem oder mehrerer der in dem Quellbehälter 52 aufgenommenen Gegenstände 54 ermittelt werden und/oder mögliche Ablagepositionen in dem Zielbehälter 56 ermittelt werden.

In einem weiteren Schritt 104 (Schritt c) werden die Roboterarme 20-1, 20-2 sodann in einer ersten Richtung 70 (vgl. mit Bezugszeichen 70 bezeichnete Pfeile, im Beispiel im Uhrzeigersinn) um die Hauptachse 29 verschwenkt, sodass der erste Roboterarm 20-1 den Quellbehälter 52 anfährt und der zweite Roboterarm 20-2 den Zielbehälter 56 anfährt (oder umgekehrt). Die Roboterarme 20-1, 20-2 fahren insofern jeweils einen unterschiedlichen Behälter 52, 56 an.

Eine Bewegung der Roboterarme 20-1, 20-2 um die Hauptachse 29 ist vorzugsweise derart synchronisiert, dass ein von den ersten Gliedern 20-1, 20-2 eingeschlossener Winkel α um die Hauptachse 29 nicht kleiner als 120°, insbesondere nicht kleiner als 140°, ist.

In einem weiteren Schritt 106 (Schritt d) wird mittels des Endeffektors 14-1 des ersten Roboterarms 20-1 (also desjenigen Roboterarms 20-1, welcher den Quellbehälter 52 angefahren hat) ein Gegenstand 54 aus dem Quellbehälter 52 gegriffen. Zu diesem Zweck ist es denkbar, dass der Endeffektor 14-1 des ersten Roboterarms 20-2 mittels der Spindel 34-1 entlang der Spindelachse 36-1 in Richtung des Quellbehälters 52 verfahren wird. Optional wird der Endeffektor 14-1 vor dem Greifen des Gegenstands 54 um die Schwenkachse 44-1 verschwenkt, bspw. um die Ausrichtung des Endeffektors 14-1 an eine Position und Lage des zu greifenden Gegenstands 54 anzupassen. Für den Fall, dass an dem Endeffektor 14-2 des zweiten Roboterarms 20-2 ein Gegenstand 54 gehalten ist, wird dieser Gegenstand 54 in Schritt 106 an einer Ablageposition in dem Zielbehälter 56 abgelegt. Zu diesem Zweck ist es denkbar, dass der Endeffektor 14-2 des zweiten Roboterarms 20-2 mittels der Spindel 34-2 entlang der Spindelachse 36-2 in Richtung des Zielbehälters verfahren wird. Optional wird der Endeffektor 14-2 vor dem Ablegen des Gegenstands 54 um die Schwenkachse 44-2 verschwenkt, bspw. um die Ausrichtung des Endeffektors 14-2 an eine Ablageposition in dem Zielbehälter 56 anzupassen.

Wie vorstehend erläutert, erfolgt das Anfahren des ersten Roboterarms 20-1 an den Quellbehälter 52 (Schritt 104), das Greifen eines Gegenstands 54 aus dem Quellbehälter 52 und/oder das optionale Schwenken des Endeffektors 14-1 (Schritt 106) vorzugsweise in Abhängigkeit von zuvor in Schritt 102 optional ermittelten Gegenstands-Informationen. Ebenso erfolgt das Anfahren des zweiten Roboterarms 20-2 an den Zielbehälter 56 (Schritt 104), das Schwenken des Endeffektors 14-2 und/oder das Ablegen des Gegenstands 54 in den Zielbehälter (Schritt 106) vorzugsweise in Abhängigkeit einer zuvor in Schritt 102 ermittelten Ablageposition in dem Zielbehälter 56.

In einem weiteren Schritt 108 (Schritt e) werden die Roboterarme 20-1, 20-2 in einer zu der ersten Richtung 70 entgegengesetzten zweiten Richtung 72 (im Beispiel im Gegenuhrzeigersinn) um die Hauptachse 29 verschwenkt, bis die Roboterarme 20-1, 20-2 erneut die Nullstellung einnehmen. Bei nicht dargestellten Ausgestaltungen ist es aber auch möglich, dass die Roboterarme 20-1, 20-2 weiter in der ersten Richtung 70 verschwenkt werden, sodass kein Richtungswechsel erforderlich ist.

In einem weiteren Schritt 110 (Schritt f) wird sodann der Quellbehälter 52 und/oder der Zielbehälter 56 in analoger Weise zu Schritt 102 mittels der Erkennungseinrichtung 58 charakterisiert.

In einem weiteren Schritt 112 (Schritt g) werden die Roboterarme 20-1, 20-2 sodann in der zweiten Richtung 72 weiter verschwenkt, dass der erste Roboterarm 20-1 den Zielbehälter 56 anfährt und der zweite Roboterarm 20-2 den Quellbehälter 52 anfährt.

In einem weiteren Schritt 114 (Schritt h) wird - analog zu Schritt 106 - nun mittels des Endeffektors 14-2 des zweiten Roboterarms 20-2 (also desjenigen Roboterarms 20-2, welcher den Quellbehälter 52 angefahren hat) ein Gegenstand 54 aus dem Quellbehälter 52 gegriffen. Optional wird der Endeffektor 14-2 vor dem Greifen des Gegenstands 54 um die Schwenkachse 44-2 verschwenkt, bspw. um die Ausrichtung des Endeffektors 14-2 an eine Position und Lage des zu greifenden Gegenstands 54 anzupassen. Zudem wird der in Schritt 106 von dem Endeffektor 14-1 des ersten Roboterarms 20-1 gegriffene Gegenstand 54 nun in den Zielbehälter 56 abgelegt, insbesondere an eine in Schritt 110 ermittelte Ablageposition in dem Zielbehälter 56. Optional wird der Endeffektor 14-1 vor dem Ablegen des Gegenstands 54 um die Schwenkachse 44-1 verschwenkt, bspw. um die Ausrichtung des Endeffektors 14-2 an eine Ablageposition in dem Zielbehälter 56 anzupassen.

Vorzugsweise erfolgt das Verschwenken der Roboterarme in Schritt 112, das optionale Schwenken des Endeffektors 14-2 und/oder das Greifen des Gegenstands 54 aus dem Quellbehälter 52 (Schritt 114) in Abhängigkeit von Schritt 110, insbesondere in Abhängigkeit einer Schritt 110 optional ermittelten Gegenstands-Information. Das Anfahren des ersten Roboterarms 20-1 an den Zielbehälter 56 (Schritt 112), das optionale Schwenken des Endeffektors 14-1 und/oder das Ablegen des Gegenstands 54 in den Zielbehälter (Schritt 114) erfolgt vorzugsweise in Abhängigkeit einer zuvor in Schritt 110 optional ermittelten Ablageposition in dem Zielbehälter 56.

In einem weiteren Schritt 116 werden die Roboterarme 20-1, 20-2 nun wieder in der ersten Richtung 70 um die Hauptachse 29 in die Nullstellung überführt. Vorzugsweise wird das Verfahren dann ab Schritt 102 wiederholt, insbesondere bis alle Gegenstände 54 oder eine zuvor definierte Teilmenge der Gegenstände 54 aus dem Quellbehälter 52 in den Zielbehälter 56 überführt sind.

## Patentansprüche

1. Verfahren zum Handhaben von Gegenständen (54) mittels einer Handhabungsanlage (10), umfassend:
- einen Roboter (12) mit einem ersten Roboterarm (20-1) und einem zweiten Roboterarm (20-2), an denen jeweils ein Endeffektor (14-1, 14-2) zum Greifen jeweils eines Gegenstands (54) angeordnet ist, wobei die Roboterarme (20-1, 20-2) um eine gemeinsame Hauptachse (29) schwenkbar sind, wobei die Roboterarme (20-1, 20-2) jeweils eine Scara-Kinematik aufweisen;
- einen Quellbehälter (52) zur Aufnahme von Gegenständen (54) und einen Zielbehälter (56) zur Aufnahme von Gegenständen (54), wobei der Quellbehälter (52) und der Zielbehälter (56) derart um die Hauptachse (29) verteilt angeordnet sind, dass die Roboterarme (20-1, 20-2) Gegenstände (54) aus dem Quellbehälter (52) in den Zielbehälter (56) überführen können, dass die Roboterarme (20-1, 20-2) über dem Quellbehälter (52) und dem Zielbehälter (56) hinweg schwenkbar sind, und dass die Roboterarme (20-1, 20-2) eine Nullstellung einnehmen können, in welcher sich die Roboterarme (20-1, 20-2) weder über dem Quellbehälter (52) noch über dem Zielbehälter (56) befinden;
- eine Erkennungseinrichtung (58), umfassend
eine Quellbehälter-Erfassungseinheit (60),
insbesondere erste Kamera, welche dazu ausgebildet ist, den Quellbehälter (52), insbesondere bildlich, zu erfassen, und
eine Zielbehälter-Erfassungseinheit (62), insbesondere zweite Kamera, welche dazu ausgebildet ist, den Zielbehälter (56), insbesondere bildlich, zu erfassen, wobei die Roboterarme (20-1, 20-2) derart um die Hauptachse (29) verschwenkt werden, dass jeder Roboterarm (20-1, 20-2) abwechselnd den Quellbehälter (52) und den Zielbehälter (56) anfährt,
wobei eine Bewegung der Roboterarme (20-1, 20-2) derart synchronisiert ist, dass dann, wenn der erste Roboterarm (20-1) den Quellbehälter (52) anfährt, der zweite Roboterarm (20-2) den Zielbehälter (56) anfährt und umgekehrt, wobei die Roboterarme (20-1, 20-2) bei ihrer Bewegung zwischen Quellbehälter (52) und Zielbehälter (56) die Nullstellung durchlaufen, wobei dann, wenn die Roboterarme (20-1, 20-2)in der Nullstellung sind, der Quellbehälter (52) und/oder der Zielbehälter (56) mittels der Erkennungseinrichtung (58) charakterisiert wird, insbesondere bildlich erfasst wird.

2. Verfahren nach Anspruch 1, umfassend die folgenden Schritte:
a) Überführen der Roboterarme in die Nullstellung, insbesondere durch Verschwenken der Roboterarme (20-1, 20-2) um die Hauptachse (29);
b) Charakterisieren des Quellbehälters (52) und/oder des Zielbehälters (56) mittels der Erkennungseinrichtung (58), insbesondere Erfassen wenigstens eines Bildes des Quellbehälters (52) und/oder Erfassen wenigstens eines Bildes des Zielbehälters (56) mittels der Erkennungseinrichtung (58);
c) Verschwenken der Roboterarme (20-1, 20-2) in einer ersten Richtung (70) um die Hauptachse (29) derart, dass der erste Roboterarm (20-1) den Quellbehälter (52) anfährt und der zweite Roboterarm (20-2) den Zielbehälter (56) anfährt;
d) Greifen eines Gegenstands (54) aus dem Quellbehälter (52) mittels des Endeffektors (14-1) des ersten Roboterarms (20-2), und, für den Fall, dass an dem Endeffektor (14-2) des zweiten Roboterarms (20-2) ein Gegenstand (54) gehalten ist, Ablegen dieses Gegenstands (54) in den Zielbehälter (56);
e) Überführen der Roboterarme (20-1, 20-2) in die Nullstellung, insbesondere durch Verschwenken der Roboterarme (20-1, 20-2) in einer zu der ersten Richtung (70) entgegengesetzten zweiten Richtung (72) um die Hauptachse (29);
f) Charakterisieren des Quellbehälters (52) und/oder des Zielbehälters (56) mittels der Erkennungseinrichtung (58), insbesondere Erfassen wenigstens eines Bildes des Quellbehälters (52) und/oder wenigstens eines Bildes des Zielbehälters (56) mittels der Erkennungseinrichtung (58);
g) Verschwenken der Roboterarme (20-1, 20-2) in der ersten Richtung (70) oder in einer zu der ersten Richtung (70) entgegengesetzten zweiten Richtung (72) um die Hauptachse (29) derart, dass der erste Roboterarm (20-1) den Zielbehälter (56) anfährt und der zweite Roboterarm (20-2) den Quellbehälter (52) anfährt;
h) Greifen eines Gegenstands (54) aus dem Quellbehälter (52) mittels des Endeffektors (14-2) des zweiten Roboterarms (20-2), und, für den Fall, dass an dem Endeffektor (14-1) des ersten Roboterarms (20-1) ein Gegenstand (54) gehalten ist, Ablegen dieses Gegenstands (54) in den Zielbehälter (56).

3. Verfahren nach Anspruch 1 oder 2, wobei das Anfahren der Roboterarme (20-1, 20-2) an den Quellbehälter (52) oder den Zielbehälter (56), das Greifen eines Gegenstands (54) aus dem Quellbehälter (52) und/oder das Ablegen eines Gegenstands (54) in den Zielbehälter (56) in Abhängigkeit eines Ergebnisses der Charakterisierung des Quellbehälters (52) oder des Zielbehälters (54) mittels der Erkennungseinrichtung (58) erfolgt.

4. Verfahren nach einem der vorherigen Ansprüche, wobei die Erkennungseinrichtung (58), insbesondere die Quellbehälter-Erfassungseinheit(60), dazu ausgebildet ist, Gegenstands-Informationen zu einem oder mehreren in dem Quellbehälter (52) angeordneten Gegenständen (54) zu ermitteln, insbesondere deren Geometrie und/oder Position und Lage,
wobei das Charakterisieren des Quellbehälters (52) das Ermitteln von Gegenstands-Informationen zu einem oder mehreren von in dem Quellbehälter (52) angeordneten Gegenständen (54) umfasst.

5. Verfahren nach den Ansprüchen 2 und 4, wobei das Anfahren der Roboterarme (20-1, 20-2) an den Quellbehälter in den Schritten c) und g) und/oder das Greifen des Gegenstands (54) in den Schritten d) und h) in Abhängigkeit einer von der Erkennungseinrichtung (58) ermittelten Gegenstands-Information erfolgt.

6. Verfahren nach einem der Ansprüche 4 oder 5, wobei das Ermitteln der Gegenstands-Informationen einen oder mehrere der folgenden Schritte umfasst:
- Ermitteln einer Geometrie, insbesondere Außenform, und/oder Position und Lage eines oder mehrere der in dem Quellbehälter (52) angeordneten Gegenstände (54).
- Ermitteln eines Greifpunktes auf einem oder mehreren der in dem Quellbehälter (52) angeordneten Gegenstände (54) .

7. Verfahren nach einem der vorherigen Ansprüche, wobei die Erkennungseinrichtung (58), insbesondere die Zielbehälter-Erfassungseinheit (62), dazu ausgebildet ist, eine Ablageposition in dem Zielbehälter (56) zu ermitteln, wobei das Charakterisieren des Zielbehälters (56) das Ermitteln einer oder mehrerer Ablagepositionen in dem Zielbehälter (56) umfasst, insbesondere für einen von dem Roboter (12) gegriffenen Gegenstand (54).

8. Verfahren nach den Ansprüche 2 und 7, wobei das Anfahren der Roboterarme (20-1, 20-2) an den Zielbehälter (56) in den Schritten c) und g) und/oder das Ablegen des Gegenstands (54) in den Schritten d) und h) in Abhängigkeit einer von der Erkennungseinrichtung (58) ermittelten Ablageposition in dem Zielbehälter (56) erfolgt.

9. Verfahren nach einem der Ansprüche 7 oder 8, wobei das Ermitteln der Ablageposition das Auswählen einer Ablageposition aus der Mehrzahl von erkannten Ablagepositionen umfasst, insbesondere in Abhängigkeit einer oder mehrerer der folgenden Randbedingungen:
- Beschaffenheit und/oder Geometrie, insbesondere Größe und/oder Außenform, eines zu diesem Zeitpunkt von dem Roboter (12) gehaltenen Gegenstands (54);
- Beschaffenheit, Geometrie und/oder Position und Lage der zu diesem Zeitpunkt bereits in dem Zielbehälter (56) angeordneten Gegenstände (54).

10. Verfahren nach einem der vorherigen Ansprüche, wobei die Endeffektoren (14-1, 14-2) jeweils über eine Kopplungseinrichtung (42-1, 42-2) mit dem entsprechenden Roboterarm (20-1, 20-2) derart verbunden sind, dass der jeweilige Endeffektor (14-1, 14-2) um eine jeweilige Schwenkachse (44-1, 44-2) relativ zu dem Roboterarm (20-1, 20-2) schwenkbar ist,
wobei vor dem Greifen eines Gegenstands (14) aus dem Quellbehälter (52) und/oder vor dem Ablegen eines Gegenstands (54) in den Zielbehälter (56) der entsprechende Endeffektor (14-1, 14-2) um die Schwenkachse (44-1, 44-2) verschwenkt wird, insbesondere in Abhängigkeit einer von der Erkennungseinrichtung (58) zuvor ermittelten Gegenstands-Information oder Ablageposition.

11. Verfahren nach einem der vorherigen Ansprüche, wobei die Roboterarme (20-1, 20-2) jeweils drei nacheinander angeordnete Glieder (22-1, 22-2, 24-1, 24-2, 26-1, 26-2) aufweisen, wobei ein jeweils erstes Glied (22-1, 22-2) um die Hauptachse (29) schwenkbar ist, wobei eine Schwenkbewegung der ersten Glieder (22-1, 22-2) um die Hauptachse (29) derart synchronisiert ist, dass ein zwischen dem ersten Glied (22-1) des ersten Roboterarms (20-1) und dem ersten Glied (22-2) des zweiten Roboterarms (20-2) eingeschlossener Winkel (α) um die Hauptachse (29) nicht kleiner als 120°, insbesondere nicht kleiner als 140°, weiter insbesondere nicht kleiner als 160°, weiter insbesondere nicht kleiner als 170°, weiter insbesondere nicht kleiner als 175°, ist.

12. Verfahren nach einem der vorherigen Ansprüche, wobei die Erkennungseinrichtung (58) weitere Erfassungseinheiten (64-1, 64-2), insbesondere weitere Kameras, umfasst, wobei an jedem Roboterarm (20-1, 20-2) eine der weiteren Erfassungseinheiten (64-1, 64-2) angeordnet ist, wobei dann, wenn an einem Endeffektor (14-1, 14-2) eines Roboterarm (20-1, 20-2) ein Gegenstand (54) gehalten ist, dieser Gegenstand (54), insbesondere dessen Position und Lage an dem Endeffektor (14-1, 14-2), mittels der an diesem Roboterarm (20-1, 20-2) angeordneten weiteren Erfassungseinheit (64-1, 64-2) überwacht wird.

13. Handhabungsanlage (10), umfassend
- einen Roboter (12) mit einem ersten Roboterarm (20-1) und einem zweiten Roboterarm (20-2), an denen jeweils ein Endeffektor (14-1, 14-2) zum Greifen jeweils eines Gegenstands (54) angeordnet ist,
wobei die Roboterarme (20-1, 20-2) um eine gemeinsame Hauptachse (29) schwenkbar sind,
wobei die Roboterarme (20-1, 20-2) jeweils eine Scara-Kinematik aufweisen;
- einen Quellbehälter (52) zur Aufnahme von Gegenständen (54) und einen Zielbehälter (56) zur Aufnahme von Gegenständen (54), wobei der Quellbehälter (52) und der Zielbehälter (56) derart um die Hauptachse (29) verteilt angeordnet sind, dass die Roboterarme (20-1, 20-2) Gegenstände (54) aus dem Quellbehälter (52) in den Zielbehälter (56) überführen können, die Roboterarme (20-1, 20-2) über dem Quellbehälter (52) und dem Zielbehälter (56) hinweg schwenkbar sind, und die Roboterarme (20-1, 20-2) eine Nullstellung einnehmen können, in welcher sich die Roboterarme (20-1, 20-2) weder über dem Quellbehälter (52) noch über dem Zielbehälter (56) befinden;
- eine Erkennungseinrichtung (58), umfassend eine Quellbehälter-Erfassungseinheit (60),
insbesondere erste Kamera, welche dazu ausgebildet ist, den Quellbehälter (52), insbesondere bildlich, zu erfassen, und
eine Zielbehälter-Erfassungseinheit (62), insbesondere zweite Kamera, welche dazu ausgebildet ist, den Zielbehälter (56), insbesondere bildlich, zu erfassen;
- eine Steuereinrichtung zur Ansteuerung der Handhabungsanlage (10), wobei die Steuereinrichtung dazu eingerichtet ist, das Verfahren nach einem der vorherigen Ansprüche durchzuführen.

14. Handhabungsanlage nach Anspruch 13, wobei der Roboter (12) eine erste Scara-Robotereinheit (66-1) umfasst, welche den ersten Roboterarm (20-1) bereitstellt, und wobei der Roboter (12) eine zweiten Scara-Robotereinheit (66-2) umfasst, welche den zweiten Roboterarm (20-2) bereitstellt.

15. Handhabungsanlage nach Anspruch 13, wobei der Roboter (12) eine Roboterbasis (18) aufweist, wobei der erste Roboterarm (20-1) und der zweite Roboterarm (20-2) um die Hauptachse (29) schwenkbar an der Roboterbasis (18) befestigt sind.

16. Handhabungsanlage nach einem der Ansprüche 13 bis 15, wobei die Roboterarme (20-1, 20-2) jeweils eine Spindel (34-1, 34-2) aufweisen, wobei der Endeffektor (14-1, 14-2) eines jeweiligen Roboterarms (20-1, 20-2) an der Spindel (34-1, 34-2) dieses Roboterarms (20-1, 20-2) angeordnet ist, insbesondere wobei die jeweilige Spindel (34-1, 34-2) zum Antrieb einer translatorischen und/oder einer rotatorischen Stellbewegung bezüglich einer jeweiligen, zu der Hauptachse (29) parallelen Spindelachse (36-1, 36-2) ausgebildet sind.

17. Handhabungsanlage nach dem vorherigen Anspruch, wobei die Roboterarme (20-1, 20-2) jeweils drei nacheinander angeordnete Glieder (22-1, 22-2, 24-1, 24-2, 26-1, 26-2) aufweisen, wobei ein jeweils erstes Glied (22-1, 22-2) um eine der Hauptachse (29) entsprechende erste Achse (28) schwenkbar ist, insbesondere an einer Roboterbasis (18) gelagert ist, wobei ein jeweils zweites Glied (24-1, 24-2) um eine jeweilige zweite Achse (32-1, 32-2) schwenkbar mit dem ersten Glied (22-1, 22-2) verbunden ist, wobei ein jeweils drittes Glied (26-1, 26-2) durch die jeweilige Spindel (34-1, 34-2) gebildet ist, wobei die Spindel (34-1, 34-2) um die Spindelachse (36-1, 36-2) drehbar mit dem zweiten Glied (24-1, 24-2) verbunden ist.

18. Handhabungsanlage nach einem der Ansprüche 13 bis 17, wobei die Achsen (29, 32-1, 32-2, 36-1, 36-2) der Roboterarme (20-1, 20-2) zueinander parallel, insbesondere vertikal, verlaufen.

19. Handhabungsanlage nach einem der Ansprüche 13 bis 18, wobei die Endeffektoren (14-1, 14-2) jeweils über eine Kopplungseinrichtung (42-1, 42-2) mit dem entsprechenden Roboterarm (20-1, 20-2), insbesondere der jeweiligen Spindel (34-1, 34-2), derart verbunden sind, dass der jeweilige Endeffektor (14-1, 14-2) um eine jeweilige Schwenkachse (44-1, 44-2) relativ zu dem Roboterarm (20-1, 20-2), insbesondere der Spindel (34-1, 34-2), schwenkbar ist.
